Europäisches Patentamt

European Patent Office

Office européen des brevets

(19)

(11) Veröffentlichungsnummer : **0 176 729**
**B1**

(12)

# EUROPÄISCHE PATENTSCHRIFT

(45) Veröffentlichungstag der Patentschrift :
15.06.88

(21) Anmeldenummer : 85110347.3

(22) Anmeldetag : 19.08.85

(51) Int. Cl.⁴ : **F 28 F  1/32**, F 28 F  9/16,
B 21 D 53/08, F 16 L 41/00,
F 28 F  1/06

(54) Wärmetauscher sowie Verfahren und Vorrichtung zur Herstellung derselben.

(30) Priorität : 31.08.84 DE 3432073

(43) Veröffentlichungstag der Anmeldung :
09.04.86 Patentblatt 86/15

(45) Bekanntmachung des Hinweises auf die Patenterteilung : 15.06.88 Patentblatt 88/24

(84) Benannte Vertragsstaaten :
AT BE CH DE FR GB IT LI LU NL SE

(56) Entgegenhaltungen :
EP-A- 0 010 499
DE-A- 2 209 325
FR-A-   708 355
FR-A-   914 779
FR-A- 2 406 794
GB-A- 1 245 579
GB-A- 2 003 762
US-A- 1 505 701
US-A- 1 996 498
US-A- 2 181 927
US-A- 3 603 384
US-A- 3 831 675

(73) Patentinhaber : Pietzcker, Dirk
Niederwaldstrasse 5
D-3500 Kassel (DE)

(72) Erfinder : Pietzcker, Dirk
Niederwaldstrasse 5
D-3500 Kassel (DE)

(74) Vertreter : Freiherr von Schorlemer, Reinfried, Dipl.-Phys.
Patentanwalt Brüder-Grimm-Platz 4
D-3500 Kassel (DE)

## Beschreibung

Die Erfindung betrifft Verfahren zur Herstellung von Wärmetauschern entsprechend den Oberbegriffen der Patentansprüche 1 und 3. Weiterhin betrifft die Erfindung nach diesen Verfahren hergestellte Wärmetauscher der in den Oberbegriffen der Patentansprüche 8 und 10 angegebenen Gattungen sowie eine Vorrichtung entsprechend dem Oberbegriff des Patentanspruchs 15 zur Herstellung solcher Wärmetauscher.

Wärmetauscher der hier interessierenden Art stellen eine Sonderform von Röhrenkühlern dar. Sie unterscheiden sich von üblichen Röhrenkühlern dadurch, daß die Rohre allein durch Aufweitung ihres Querschnitts mit den Lamellen verbunden und daher nicht zusätzlich mit diesen verlötet, verschweißt oder verklebt werden. Zur Erzielung eines guten Wirkungsgrades ist dabei allerdings erforderlich, daß die Rohrwandungen jeweils am gesamten Umfang satt an den Öffnungsrändern bzw. an den Kragen anliegen, weil andernfalls der Wärmeübergang zu sehr beeinträchtigt ist. Dieses satte Anliegen wird dadurch erreicht, daß beim Aufweiten der Rohre auch die Kragen der Lamellen geringfügig und im elastischen und teilweise plastischen Bereich gestaucht werden.

Bei Anwendung von Rohren mit kreisförmigen Querschnitten ist die beschriebene Verbindungsart problemlos. Wegen der ungünstigen Strömungsform ist die Anwendung von Rundrohren allerdings nicht vorteilhaft. Rohre mit ovalen oder flachovalen Querschnitten haben demgegenüber zwar den Vorteil einer strömungsgünstigen Form. Rohre dieser Art können jedoch bisher nur in begrenztem Umfang durch Aufweiten montiert werden. Es ist zwar bei Rohren mit ovalen Querschnitten bekannt, daß die Aufweitungstechnik noch anwendbar ist, solange das Verhältnis des längsten Durchmessers zum kürzesten Durchmesser nicht größer als etwa 4 : 1 ist. Oberhalb dieser Grenze nimmt die Qualität der durch Aufweitung hergestellten Verbindungen jedoch stark ab, insbesondere weil die Rohre im Bereich ihrer Breitseiten einfallen, selbst wenn sie dort stärker als im Bereich der Schmalseiten aufgeweitet werden. Abgesehen davon lassen sich wie bei Anwendung von Rundrohren nur Rohre mit verhältnismäßig kleinen längsten Durchmessern verwenden, weil andernfalls die Wandstärken der Rohre das aus Kostengründen gerade noch vertretbare Maß von ca. 0,4 mm beträchtlich überschreiten müßten. Dies hat zur Folge, daß auch Rohre mit ovalem Querschnitt, soweit sie durch Aufweitung mit den Lamellen verbunden werden sollen, bisher grundsätzlich in mehreren Ebenen angeordnet werden.

Bei Anwendung von flachovalen Rohren, die zwei ebene, parallel angeordnete Breitseiten aufweisen, die an ihren Enden durch halbzylindrische Abschnitte verbunden sind, ist das Verbinden der Rohre mit den Lamellen durch Aufweiten des Rohrquerschnitts noch schwieriger. Es ist zwar bereits bekannt (GB-A-2 003 762), derartige Rohre parallel zu ihren langen Durchmessern bis in den plastischen Bereich hinein zu spreizen und die dadurch bewirkte elastische Wölbung ihrer Breitseiten dazu auszunutzen, diese an entsprechend gewölbte Kragen- und Öffnungswandungen der Lamellen anzulegen. Dieses Verfahren setzt aber nicht nur eine exakte Vorausberechnung der genannten Wölbungen voraus, was praktisch kaum möglich ist, sondern bringt auch hinsichtlich der Gefahr des Einfallens keinen erkennbaren Vorteil mit sich. Dasselbe gilt für ein anderes bereits bekanntes Verfahren (US-A-3 603 384), nach welchem die Anlage der Breit- und Schmalseiten der Rohre an den Öffnungswandungen und Kragen allein durch elastische Biegekräfte herbeigeführt wird.

Schließlich ist es bei Wärmetauschern der eingangs bezeichneten Gattung bereits bekannt (FR-A-2 406 794), die Breitseiten der Rohre mit Abstandhaltern abzustützen, um dadurch eine Versteifung der durch Pressung auf den Rohren gehaltenen Kühllamellen zu erreichen. Da diese Abstandhalter in die Rohre eingepreßt werden, können sie zwar die mechanische Stabilität des Wärmetauschers insgesamt erhöhen, aber nicht das durch das Aufweiten der Rohre bedingte Einfallen derselben verhindern.

Der Erfindung liegt die Aufgabe zugrunde, die Verfahren der eingangs bezeichneten Gattungen dahingehend weiterzubilden, daß die Rohre und Lamellen des Wärmetauschers auf einfache Weise miteinander verbunden werden können und ein guter Kontakt insbesondere zwischen den Wandungen der Kragen und den Wandungen der Rohre hergestellt wird. Weiterhin sollen nach diesen Verfahren hergestellte Wärmetauscher vorgeschlagen werden, bei denen Rohre verwendet werden können, die auch bei kleinen Wandstärken verhältnismäßig große längste Durchmesser und verhältnismäßig kleine kürzeste Durchmesser aufweisen. Schließlich soll auch eine Vorrichtung vorgeschlagen werden, die sich zur Serienproduktion solcher Wärmetauscher eignet.

Zur Lösung dieser Aufgabe dienen, soweit die Verfahren betroffen sind, erfindungsgemäß die beiden in den Ansprüchen 1 und 3 im einzelnen gekennzeichneten Verfahren. Die daraus resultierenden Wärmetauscher sind in den Patentansprüchen 8 und 10 näher gekennzeichnet. Schließlich ergeben sich die Merkmale der erfindungsgemäßen Vorrichtung aus den kennzeichnenden Merkmalen des Patentanspruchs 15.

Die Erfindung bringt den Vorteil mit sich, daß die durch plastische Verformung aufgeweiteten Rohre nach dem Aufweiten im Bereich ihrer Breitseiten durch die Abstandhalter auf ihrem durch das Aufweiten hergestellten Querschnitt gehalten werden. Dadurch ist ein Einfallen der Rohre in den kritischen Bereichen der geringsten Wölbung auch dann nicht mehr möglich, wenn das Verhältnis des längsten zum kürzesten Durchmesser im Vergleich zur Wandstärke der Rohre vergleichsweise groß gewählt wird. Werden die Rohre durch das Herausdrücken von Sicken mit den Lamellen verbunden, ist häufig sogar die Anwendung von Abstandhaltern nicht erforderlich.

Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen :

Fig. 1 die perspektivische Darstellung eines erfindungsgemäßen Wärmetauschers mit einer Vielzahl von Rohren ;

Fig. 2 einen Schnitt längs der Linie II-II der Fig. 1 durch eine einzelne Lamelle des Wärmetauschers im Bereich einer Öffnung ;

Fig. 3 die Draufsicht auf ein einzelnes Rohr des Wärmetauschers ;

Fig. 4 die Draufsicht auf einen Ausschnitt einer einzelnen Lamelle des Wärmetauschers nach Fig. 1 mit zwei Auführungsformen für die Rohre vor und nach dem Aufweiten ;

Fig. 5 eine der Fig. 4 entsprechende Ansicht für eine dritte Ausführungsform der Rohre ;

Fig. 6 und 7 die Vorderansicht bzw. Draufsicht eines Abstandhalters des Wärmetauschers nach Fig. 1 ;

Fig. 8 schematisch ein Aufweitwerkzeug für das Rohr nach Fig. 3 ;

Fig. 9 eine Draufsicht auf ein Aufweitwerkzeug mit Abstandhalter nach Fig. 8 ; und

Fig. 10 bis 12 schematisch die Herstellung von Rohren mit Sicken. .

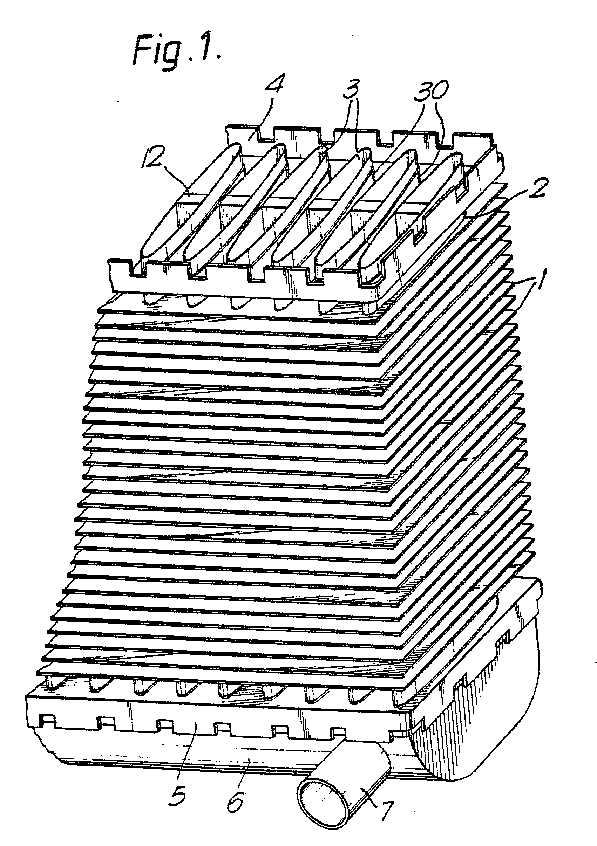

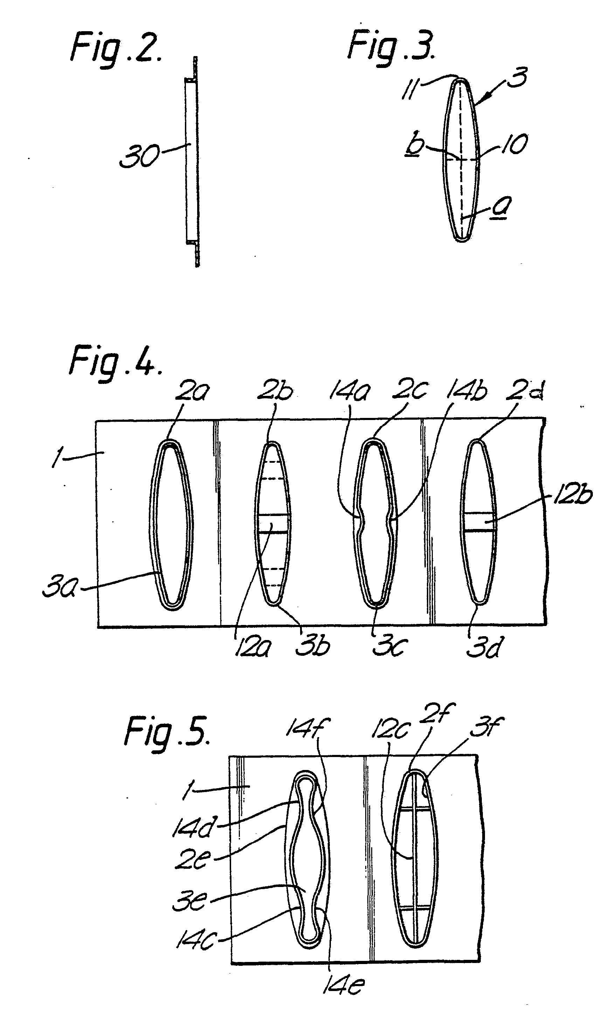

Der in Fig. 1 dargestellte Wärmetauscher ist nach Art eines üblichen Röhrenkühlers ausgebildet. Er enthält eine Anzahl von parallel und mit Abstand angeordneten, plattenförmigen Lamellen oder Rippen 1, die jeweils eine Reihe von ovalen Öffnungen 2 aufweisen, welche im gestapelten Zustand der Lamellen 1 koaxial angeordnet sind. Die die Öffnungen 2 begrenzenden Ränder der Lamellen 1 sind durch dazu koaxiale Kragen 30 verlängert (Fig. 2). Die Öffnungen 2 und Kragen 30 sind von senkrecht zu den Lamellen 1 angeordneten Rohren 3 durchragt, die einen dem Querschnitt der Öffnungen 2 und Kragen 30 entsprechenden ovalen Querschnitt besitzen. Die oberen und unteren Enden der Rohre 3 ragen durch entsprechende Öffnungen je einer Endplatte 4 bzw. 5 und sind längs ihres gesamten Umfangs mit den Rändern dieser Öffnungen flüssigkeits- bzw. gasdicht verlötet, verschweißt, verklebt oder mechanisch dicht verbunden. An der unteren Endplatte 5 ist ein üblicher Sammelkasten 6 befestigt, der einen Anschluß 7 für die Zu- oder Ableitung des die Rohre 3 durchströmenden Mediums, z. B. Wasser, aufweist. Ein entsprechender, nicht dargestellter Sammelkasten ist mit der oberen Endplatte 4 verbunden. Zwischen den Lamellen 1 können noch übliche Turbulatoren vorgesehen sein, die von einem anderen Medium, z. B. Luft, durchströmt werden.

Fig. 3 zeigt ein einzelnes Rohr 3 des Wärmetauscher nach Fig. 1. Das Rohr 3 weist einen ovalen Querschnitt auf, dessen längster Durchmesser a beispielsweise 39 mm und dessen kürzester Durchmesser b beispielsweise 8 mm beträgt. Die Wandstärke des Rohrs 3 beträgt beispielsweise 0,4 mm. Im übrigen besitzt das Rohr 3 zwei gegenüberliegende Breitseiten 10, die mit relativ großem Krümmungsradius gewölbt sind und jeweils an zwei gegenüberliegende Schmalseiten 11 angrenzen, deren Krümmungsradien relativ klein sind.

Fig. 4 zeigt einen Teil einer Lamelle 1 mit vier der Öffnungen 2a bis 2d, die in ihrer Form dem äußeren Querschnitt der Rohre 3a bis 3d entsprechen, jedoch teilweise einen geringfügig größeren Querschnitt als diese besitzen. Beispielsweise ist der Querschnitt der Öffnung 2a längs des gesamten Umfangs so groß, daß zwischen dem die Öffnung begrenzenden Rand und dem Rohr 3a, wenn dieses in die Öffnung 2a eingesetzt ist, etwa ein Zehntel Millimeter Luft verbleibt.

Zur Verbindung der Lamellen 1 mit den Rohren 3 werden diese zunächst in die Öffnungen 2 eingelegt. In Fig. 4 ist dies beispielsweise für ein Rohr 3a dargestellt, das die Öffnung 2a durchragt. Sodann wird das Rohr 3a mittels eines Aufweitwerkzeugs, das von innen durch das Rohr 3a gezogen oder gedrückt wird, auf seinem ganzen Querschnitt aufgeweitet, bis es allseitig satt am Rand der Öffnung 2 und des zugehörigen Kragens anliegt, wie in Fig. 4 für ein Rohr 3b und die Öffnung 2b gezeigt ist. Die Verformung des Rohrs 3b erfolgt dabei im plastischen Bereich und ist so groß, daß der die Öffnung 2b umgebende Rand der Lamelle 1 bzw. des zugehörigen Kragens zumindest geringfügig elastisch verformt wird um nach dem Aufweitungsschritt eine elastiche Anpreßkraft zu erhalten.

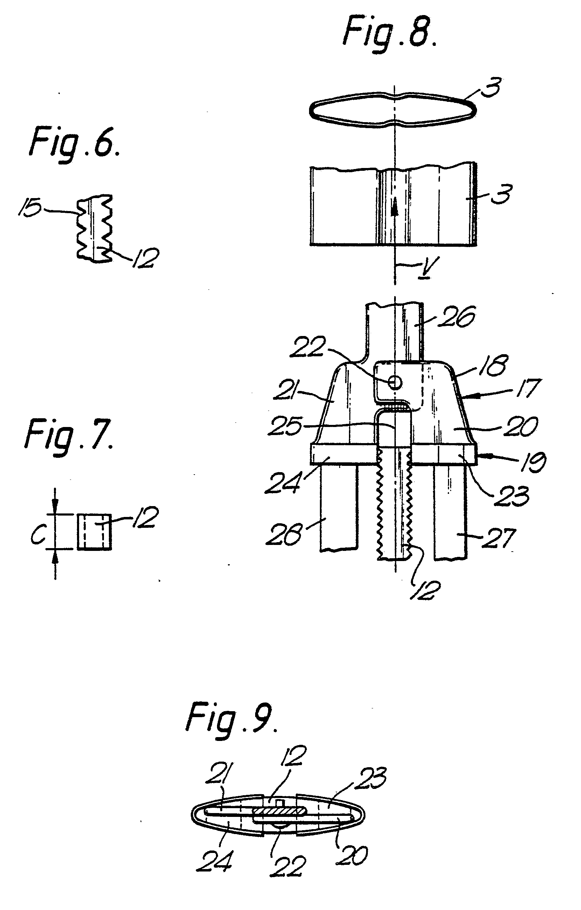

Dem Aufweitwerkzeug wird beim Aufweitungsschritt erfindungsgemäß wenigstens ein Abstandhalter 12a, z. B. in Form einer Stange nachgeschoben, dessen Breite c (Fig. 6) genau dem Abstand entspricht, den die beiden Breitseiten 10 des Rohrs 3b nach dem Aufweiten aufweisen. Dadurch ist sichergestellt, daß das aufgeweitete Rohr 3b nach dem Durchgang des Aufweitwerkzeugs nicht wieder einfällt, d. h. sich parallel zum kürzesten Durchmesser b zusammenzieht und dadurch eine für den Wärmeübergang schädliche Lücke zwischen den Breitseiten 10 und den zugehörigen Abschnitten des Öffnungsrandes bzw. des Kragens entstehen läßt.

Obwohl in Fig. 4 nur ein einziger Abstandhalter 12a dargestellt ist, in dessen Mittelebene etwa der kleinste Durchmesser b liegt, können pro Rohr auch zwei oder mehr Abstandhalter 12a vorgesehen sein, wie für das Rohr 3b mit gestrichelten Linien angedeutet ist. Die Zahl der benötigen Abstandhalter ist vom Einzelfall, insbesondere auch von der Größe der verwendeten Rohre abhängig.

Die Abstandhalter 12a dienen dazu, den erwünschten Anpreßdruck der beiden Breitseiten 10 an die Ränder der Öffnungen 2 bzw. an die Kragen 30 sicherzustellen. Im Bereich der Schmalseiten 11 ist normalerweise kein Abstandhalter erforderlich, weil deren Krümmungsradien so klein sind, daß sich die einzelnen Wandabschnitte auch nach der Verformung aneinander abstützen können, ohne sich parallel zum größten Durchmesser a zusammenzuziehen.

Nach einer bevorzugten Ausführungsform der Erfindung enthält das Rohr, bevor es in die Öffnungen 2 bzw. Kragen 30 eingeführt wird, einen geringfügig kleineren Querschnitt als die Öffnung und in seinen beiden Breitseiten 10 jeweils wenigstens eine Nut oder Sicke 14, wie dies in Fig. 4 für ein in die Öffnung 2c eingelegtes Rohr 3c angedeutet ist. Die Sicken 14 sind beispielsweise in der Mitte der Breitseiten 10 angeordnet und erstrecken sich über die gesamte Rohrlänge. Beide Sicken 14 verlaufen außerdem von außen nach innen. Durch diese Maßnahme wird eine berechenbare, geometrisch definierte Materialreserve für den Rohrumfang geschaffen. Das Rohr 3c wird wie das Rohr 3a mit dem Aufweitwerkzeug behandelt, so daß es schließlich die Form annimmt, die in Fig. 4 für das die Öffnung 2d durchragende Rohr 3d dargestellt ist. Das Einziehen eines Abstandhalters 12b erfolgt entsprechend, so daß sich die Rohre 3b und 3d im fertigen Zustand äußerlich kaum voneinander unterscheiden.

Im Unterschied zu den Rohren 3a, 3b wird bei den Rohren 3c, 3d vor dem Aufweitschritt eine definierte Vergrößerung des aufzuweitenden Rohrumfangs ermöglicht. Die Umfangsvergrößerung beim Aufweiten braucht daher nicht oder wenigstens nicht allein durch Dehnen bzw. Recken der Rohrwandungen erfolgen, da das in den Sicken 14 befindliche Material die an den Öffnungsrand andrückbare Rohrwandung vergrößert. Nach dem Aufweiten besitzen die Rohre 3d wie die Rohre 3b einen Querschnitt, der etwas größer als der ursprüngliche Querschnitt der Öffnungen 2 und Kragen 30 ist.

Beim Durchziehen des Aufweitwerkzeugs wird die Umfangsvergrößerung der Rohre nicht allein durch die unmittelbare Einwirkung des Aufweitwerkzeugs selbst, sondern auch dadurch erhalten, daß die in den Sicken 14 gespeicherte Materialreserve durch das Aufweitwerkzeug wieder aus den Sicken 14 herausgedrückt wird und in die schwach gewölbten Teile der Breitseiten 10 wandert, wobei gleichzeitig diejenigen Teile der Breitseiten 10, die stärker gewölbt sind, nach außen gedrückt werden. Hierdurch wird in noch besserem Maße erreicht, daß die Rohre beim Aufweiten zuverlässig am ganzen Umfang an die Öffnungsränder angepreßt werden und nach dem Aufweiten nicht einfallen. Denn einerseits kann die in den Sicken gespeicherte Materialreserve so bemessen werden, daß das Rohr nach dem Durchgang des Aufweitwerkzeugs fest gegen die Ränder der Öffnungen bzw. der Kragen gedrückt ist und diese sogar noch etwas elastisch verformt. Andererseits ist ein Einfallen der Rohre dort, wo sie sich nicht auf den Abstandhaltern 12 abstützen können, kaum möglich, da die Wölbungen vorgegeben sind und kein Grund für ein Einfallen erkennbar ist, insbesondere wenn die Sicken so bemessen sind, daß beim Aufweiten gerade der erwünschte Rohrquerschnitt erzielt wird, ohne daß eine plastische Verformung eintritt.

Bei der Ausführungsform nach Fig. 5 werden Rohre 3e vor dem Einführen in Öffnungen 2e der Lamellen 1 auf jeder Breitseite mit je zwei Sicken 14c, 14d bzw. 14e, 14f versehen, wobei jeweils die Sicken 14c und 14e nahe der einen Schmalseite und die Sicken 14d und 14f nahe der anderen Schmalseite des Rohrs 3e angeordnet sind. Auch die Sicken 14c bis 14f erstrecken sich über die ganze Rohrlänge und von außen nach innen. Die Sicken bilden eine definierte Materialreserve derart, daß der Querschnitt der Rohre 3e vor dem Einführen in die Öffnungen 2e kleiner als der Querschnitt dieser ist. Nach dem Aufweiten der Rohre 3e, wie dies für ein Rohr 3f im rechten Teil der Fig. 5 dargestellt ist, weisen die Rohre dagegen einen etwas größeren Querschnitt auf, als dem ursprünglichen Querschnitt der Öffnung 2e entspricht, so daß die Rohre allseitig fest an den Rändern der Öffnungen bzw. der Kragen anliegen und den für einen guten Wärmeübergang wichtigen innigen Kontakt mit diesen herstellen. Im Gegensatz zu Fig. 4 werden in die Rohre 3f außerdem vorzugsweise Abstandhalter 12c eingeführt, die einen parallel zum größten Durchmesser a erstreckten Längssteg und zwei parallel zum kleinsten Durchmesser b erstreckte Querstege aufweisen, wobei die Querstege die Rohrwandungen dort abstützen, wo sich ursprünglich die Sicken 14c bis 14f befunden haben. Bei Bedarf kann außerdem die Breite des Längsstegs so gewählt werden, daß seine beiden Enden sich im Bereich der Schmalseiten gegen die Rohrwandung legen und diese ebenfalls abstützen und vor dem Einfallen schützen.

Die stangenförmigen Abstandhalter 12a, b sind in Fig. 6 und 7 in zwei Ansichten dargestellt. Ihre Länge entspricht im wesentlichen der Rohrlänge, während ihre parallel zum längsten Durchmesser a der Rohre 3 gemessene Dimension einerseits ausreichend groß sein sollte, um die erwünschte Abstützung zu gewährleisten, andererseits jedoch so klein wie möglich gehalten werden sollte, damit der Strömungsquerschnitt der Rohre 3 nicht unnötig verringert wird. Außerdem ist es zweckmäßig, die in den Hohlraum der Rohre 3 ragenden Wandabschnitte 15 der Abstandhalter 12 entsprechend Fig. 6 nicht eben, sondern wellig, zickzackförmig durchbrochen od. dgl. auszubilden. Dadurch wirken diese Wandabschnitte 15 als Turbulatoren für das durchströmende Medium, was angesichts der vergleichsweise großen Strömungsquerschnitte vorteilhaft ist. Entsprechend können die Abstandhalter 12c ausgebildet werden, die im Hinblick auf den Wärmeaustausch den Vorteil der größeren Fläche aufweisen.

Fig. 8 und 9 zeigen schematisch eine Vorrichtung zum Aufweiten der Rohre 3 und zum Einziehen der Abstandhalter 12, d. h. zum Verbinden der Rohre 3 mit den Lamellen 1. Diese Vorrichtung enthält als Hauptbestandteil ein Aufweitwerkzeug 17, dessen in die Rohre 3 einzuführendes Ende eine keil- bzw. konusförmig ausgebildete, als Einführungsschräge dienende Umfangsfläche 18 aufweist. Ein dieser Umfangsfläche 18 folgender Aufweitabschnitt 19 des Aufweitwerkzeugs 17 weist denjenigen Außenquerschnitt auf, den die aufgeweiteten Rohre 3 als Innenquerschnitt erhalten sollen.

Damit die Abstandhalter 12 unmittelbar während des Aufweitvorgangs in die Rohre 3 eingeführt werden können, sind sie zweckmäßig mit den rückseitigen Enden des Aufweitwerkzeugs 17 koppelbar. Gemäß einer bevorzugten Ausführungsform besteht das Aufweitwerkzeug 17 gemäß Fig. 8 aus zwei Teilen 20 und 21, die durch einen Schwenkzapfen 22 schwenkbar miteinander verbunden sind, der beim Einführen des Aufweitwerkzeugs 17 in die Rohre 3 zweckmäßig im wesentlichen senkrecht zu der den längsten Durchmesser a enthaltenden Mittelebene der Rohre 3 und in Höhe der kleinsten Durchmesser b angeordnet ist. Jeder der beiden Teile 20 bzw. 21 ist dabei mit einem entsprechenden Teil 23 bzw. 24 des Aufweitabschnitts 19 versehen. Die Teile 20, 21, 23 und 24 weisen an ihren Rückseiten Ausschnitte auf, die einander gegenüberliegen und eine Aufnahme 25 für die Enden der Abstandhalter 12 bilden. Durch Verschwenken der beiden Teile 20 und 21 kann eine Abstandhalter 12 in die Aufnahme 25 eingespannt oder freigegeben werden. Zur Bewegung des gesamten Aufweitwerkzeugs in Richtung eines Pfeils V können mit einem vorderen Abschnitt zumindest eines der beiden Teile 20 bzw. 21, z. B. des Teils 21, sowie mit den rückwärtigen Enden der Teile 23 und 24 Zug- oder Druckstangen 26, 27 und 28 verbunden sein, die an entsprechende Organe einer weitgehend automatisch arbeitenden Apparatur angeschlossen sind, mittels derer das Aufweitwerkzeug 17 durch eines der Rohre 3 eines Wärmetauschers bewegt wird. Dabei ergibt sich der Vorteil, daß die Abstandhalter 12 während des Durchgangs des Aufweitwerkzeugs 17 durch eines der Rohre 3 ständig und automatisch zwischen den beiden Teilen 20 und 21 bzw. 23 und 24 geklemmt bleiben, weil die Teile 23, 24 an den Rohrwandungen in Klemmrichtung geführt werden, so daß keine zusätzlichen Einrichtungen zum Ankoppeln der Abstandhalter 12 an das Aufweitwerkzeug 17 benötigt werden. Abgesehen davon ist die Anordnung vorzugsweise so getroffen, daß die Enden der Abstandhalter 12 unmittelbar in Höhe der wirksamen Umfangsfläche des zweiteiligen Abschnitts 19 ergriffen werden und die Aufnahme 25 senkrecht zur Zeichenebene der Fig. 8 durchlaufend ist. Hierdurch wird erreicht, daß die eingespannten Enden der Abstandhalter 12 entsprechend Fig. 9 jeweils ein drittes Teil des Aufweitwerkzeugs 17 bilden und die Umfangsflächen der beiden Teile 23 und 24 zu einem insgesamt dreiteiligen Aufweitabschnitt 19 ergänzen. Zur Verbesserung der Gleitfähigkeit des Aufweitabschnitts 19 und insbesondere des nachgezogenen Abstandhalters 12 in den Rohren 3 können die Berührungsflächen mit einem geeigneten Schmiermittel überzogen sein. Im übrigen weist die Apparatur, mittels derer das Aufweitwerkzeug bewegt wird, zweckmäßig jeweils so viele Aufweitwerkzeuge 17 wie der Wärmetauscher Rohre 3 auf, so daß alle Rohre 3 gleichzeitig aufgeweitet werden können.

Die Montage des erfindungsgemäßen Wärmetauschers soll in folgender Weise vorgenommen werden :

Die Endplatten 4 und 5 sowie die aus der Bearbeitungsmaschine kommenden Lamellen 1 werden in einer entsprechenden Vorrichtung in der richtigen Reihenfolge gestapelt. Danach werden die Rohre 3 in die Öffnungen 2 eingeführt, indem z. B. zunächst die Rohre in einer entsprechenden Vorrichtung vor der Montage ausgerichtet und gespannt und dann die Endplatten 4 und 5 sowie die aus der Bearbeitungsmaschine kommenden Lamellen 1 in der richtigen Reihenfolge mit ihren Öffnungen 2 auf die Rohre gebracht werden, z. B. durch Aufschieben oder durch ihr Eigengewicht, d. h. fallend. Sodann werden die Abstandhalter 12 entsprechend Fig. 6 mit den Aufweitwerkzeugen 17 gekoppelt und diese unter die einen Enden der aufzuweitenden Rohre gebracht. Es ist auch denkbar, daß die Aufweitwerkzeuge 17 über die einen Rohrenden gebracht werden und die Abstandhalter 12 gegebenenfalls mit Unterstützungen auf ihrer Länge oder mit Unterstützungen an den Schubstangen 27 und 28 über den Aufweitwerkzeugen 17 stehen.

Mit Hilfe der Zug- oder Druckstangen 26, 27 und 28 werden die Aufweitwerkzeuge 17 nun durch die zugeordneten Rohre bewegt, wobei einerseits die Rohre aufgeweitet, andererseits gleichzeitig die Abstandhalter eingeführt werden. Nachdem die Aufweitwerkzeuge die anderen Rohrenden erreicht haben, werden ihre Teile 20, 21 nach außen geschwenkt, um sie von den eingezogenen Abstandhaltern 12 zu lösen. Abschließend werden die Rohrenden mit den Endplatten 4 und 5 verlötet, verschweißt oder verklebt, und danach die Sammelkästen 6 angebracht.

Es ist auch möglich, daß die Endplatten 4 und 5 in einem gesonderten Arbeitsgang auf die Rohrenden gebracht und mit diesen verbunden, z. B. verlötet, verschweißt oder verklebt werden, und danach die Sammelkästen 6 angebracht werden.

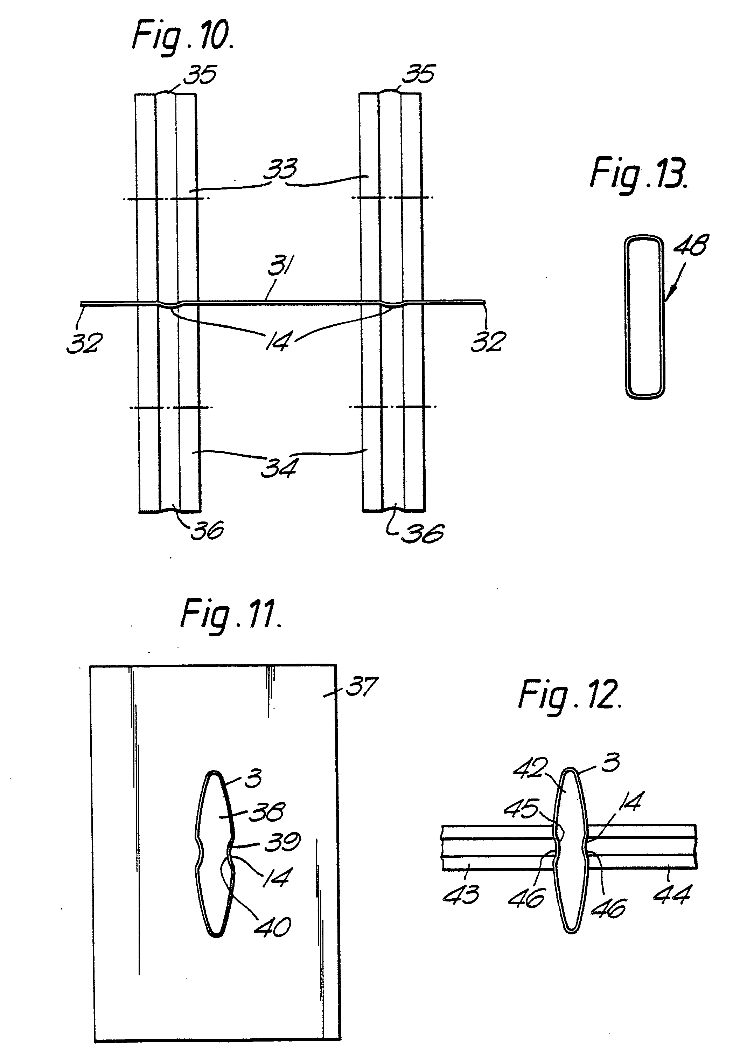

Die Sicken 14 können auf verschiedene Weise an den Rohren 3 angebracht werden. Drei Ausführungsbeispiele sind in Fig. 10 bis 12 schematisch dargestellt.

Nach Fig. 10 wird ein Rohr aus einem zunächst flachen, beispielsweise aus Aluminium bestehenden und in der Draufsicht dargestellten Band 31 hergestellt, das zwei parallele Längsränder 32 aufweist. Dieses Band 31 wird in an sich bekannter Weise in einer oder mehreren Arbeitsstufen eingerollt bzw. gebogen, bis es schließlich die Form nach Fig. 3 erhält. Nach dieser Profilierungsarbeit ist das Band 31 allerdings noch nicht zu einem Rohr 3 geschlossen, sondern weist noch einen durch die beiden sich gegenüberstehenden Längsränder 32 gebildeten Längsschlitz auf. Dieser Längsschlitz, der z. B. im Bereich einer Schmalseite 11 liegt, wird in einem abschließenden Verfahrensschritt dadurch geschlossen, daß die beiden Längsränder 32 durch Schweißen, Löten und/oder Falzen miteinander verbunden werden.

Das Anbringen einer Sicke 14 erfolgt bei dieser Herstellungsweise zweckmäßig zu irgendeinem Zeitpunkt vor dem abschließenden Verbindungsschritt. Hierzu wird das Rohr durch den Spalt wenigstens eines Walzenpaars geleitet, dessen beide drehbar gelagerten Walzen 33 und 34 mit ihren Umfangsflächen einander gegenüberstehen. Dabei weist die eine Walze 33 in ihrer Umfangsfläche einen Wulst 35, die andere Walze 34 dagegen in ihrer Umfangsfläche eine entsprechende Nut 36 auf. Die beiden Walzen 33 und 34 stehen im übrigen mit einem solchen Abstand gegenüber, daß der Wulst 35 unter Berücksichtigung der Materialstärke des Bandes 31 in die Nut 36 eintritt.

Zur Herstellung einer zweiten Sicke 14 kann, wie in Fig. 10 schematisch angedeutet ist, wenigstens ein zweites, entsprechendes Walzenpaar vorgesehen werden. Dieses Walzenpaar kann in Abhängigkeit von den räumlichen Bedingungen neben den Walzen 33, 34 oder in Arbeitsrichtung versetzt angeordnet sein, so daß das Band 31 nacheinander erst das eine und dann das andere Walzenpaar durchläuft. Im übrigen können die Walzen 33, 34 in Abhängigkeit von den Umformbedingungen und abweichend von Fig. 10 auch schräg zum Band 31 angeordnet sein.

Bei dem in Fig. 11 angedeuteten Ausführungsbeispiel wird das Rohr 3 in an sich bekannter Weise mit Hilfe eines den Rohrmantel außen umgebenden Ziehrings 37 und eines das Rohr 3 innen durchlaufenden Dorns 38 nahtlos gezogen oder nahtlos gepreßt. Im Gegensatz zur Herstellung von Rohren mit glatter Mantelfläche weist der Ziehring in seiner Innenfläche zwei Wülste 39 auf, während der Dorn 38 mit entsprechenden Nuten 40 versehen ist, so daß die Sicken 14 beim Ziehen oder Pressen in das erzeugte Rohr mit eingearbeitet werden.

Bei der Ausführungsform nach Fig. 12 werden die Sicken 14 erst nach Fertigstellung der nahtlos hergestellten oder eine Naht aufweisenden Rohre 3 angebracht. Hierzu werden die fertigen und auf eine vorgewählte Länge abgeschnittenen Rohre 3 durch ein Werkzeug geführt, das einen Dorn 42 und zwei auf die äußere Mantelfläche des Rohrs 3 einwirkende, auf diametral gegenüberliegenden Seiten des Dorns 42 angeordnete, drehbar gelagerte Rollen 43 und 44 aufweist. Der Dorn 42, dessen Querschnitt im wesentlichen dem Innenquerschnitt des Rohrs 3 entspricht, weist dabei an den Stellen, an denen die Sicken 14 zu liegen kommen sollen, zwei Nuten 45 auf, während die Walzen 43 und 44 in ihrer auf das Rohr 3 einwirkenden Umfangsfläche mit entsprechenden Wülsten 46 versehen sind. Beim Durchlaufen des Rohrs 3 durch das Werkzeug drücken daher die Walzen 43 und 44 die Sicken 14 ein, während gleichzeitig der Dorn 42 das Rohr 3 von innen her abstützt. Dabei kann der Dorn 42 mit dem Rohr 3 mitwandern oder fest in bezug auf die Rollen 43 und 44 stehen, so daß das Rohr über ihn hinweggleitet.

Schließlich ist auch eine Kombination der anhand Fig. 11 und 12 beschriebenen Verfahrensweisen möglich. Dabei wird z. B. mittels eines üblichen Preß- oder Ziehwerkzeugs ein Rohr 3 mit ovalem oder flachovalem Querschnitt und glatter Oberfläche hergestellt. Dem Dorn des Ziehwerkzeugs wird ein zweiter Dorn nachgeordnet, der entsprechend dem Dorn 42 nach Fig. 12 profiliert ist und mit einem Walzenpaar entsprechend den Walzen 43, 44 zusammenwirkt. Dadurch werden in einer ersten Verfahrensstufe zunächst nahtlose Rohre mit glatter Oberfläche erzeugt, die dann in einer zweiten, unmittelbar nachfolgenden Verfahrensstufe mit Sicken versehen werden. Ein Vorteil dieser Verfahrensweise ist, daß sie die Endlosfertigung von Rohren mit Sicken 14 ermöglicht.

Die Erfindung wird bevorzugt für die Herstellung von Aluminiumkühlern für die Kraftfahrzeugindustrie angewandt, ist aber mit denselben Vorteilen auch auf die Herstellung von Wärmetauschern für andere Zwecke und aus anderen Materialien, z. B. Stahl, Messing, Kupfer oder Kombinationen davon, anwendbar. Die Abstandhalter 12 bestehen zweckmäßig aus Metall oder Kunststoff.

Das Maß der Aufweitung hängt vom Einzelfall ab und beträgt beispielsweise ein bis zwei Zehntel Millimeter in Richtung jedes Durchmessers, wobei ggf. in Richtung der kürzeren Durchmesser eine geringere Aufweitung als in Richtung der längeren Durchmesser ausreichend sein kann. Insbesondere sollte das Maß der Aufweitung so gewählt sein, daß außer den Rohrwandungen auch die diese umschließenden Ränder der Öffnungen bzw. Kragen im elastischen und/oder plastischen Bereich gestaucht werden, um dadurch eine erhöhte Anpreßkraft zu erhalten.

Die Erfindung ist nicht auf die beschriebenen Ausführungsbeispiele beschränkt, die sich auf vielfache Weise abwandeln lassen. Dies gilt nicht nur hinsichtlich der angegebenen Maße, sondern auch hinsichtlich der Form der Rohre 3, da anstelle von ovalen Rohren auch Rohre 48 mit flachovalem Querschnitt entsprechend Fig. 13 vorgesehen werden können. Anstelle von Abstandhaltern in Form von durchgehenden Stangen oder Schienen könnten solche mit Löchern vorgesehen sein, die eine strömungsmäßige Verbindung zwischen den durch die Abstandhalter abgetrennten Kammern der Rohre ermöglichen. Auch die beschriebene Vorrichtung läßt zahlreiche Abwandlungen zu. Dies gilt insbesondere im Hinblick auf die Ausbildung des Aufweitwerkzeugs und dessen Ankopplung an die Abstandhalter. Anstelle der in Fig. 8 und 9 beschriebenen Ausführungsform, bei welcher die beiden Teile 23 und 24 jeweils durch ein zwischen ihnen eingespanntes Ende eines Abstandhalters zu dem Aufweitabschnitt 19 ergänzt werden, könnte vorgesehen sein, die einander zugewandten Flächen der beiden Teile 23 und 24 derart U-förmig auszubilden, daß ihre einander zugewendeten Stirnseiten beim Durchgang durch die Rohre aneinanderstoßen. In diesem Falle würden die beiden Teile 23 und 24 allein den Aufweitabschnitt bilden, während die durch die U-förmigen Teile 23 und 24 gebildete Öffnung als Aufnahme für einen an den Abstandhaltern 12 vorgesehenen Ansatz von verringertem Querschnitt wirken könnte, so daß der wirksame Teil des Abstandhalters unmittelbar unterhalb des Aufweitabschnitts 19 zu liegen käme. Schließlich wäre es möglich, die Ankopplung der Abstandhalter an das Aufweitwerkzeug auf ganz andere Weise zu bewirken, beispielsweise dadurch, daß Gewindeansätze an den Abstandhaltern in eine Gewindebohrung eines einteiligen Aufweitwerkzeugs eingedreht werden.

Schließlich ist die Erfindung nicht notwendigerweise auf Rohre mit Abstandhaltern beschränkt. Bei Anwendung von Rohren mit ovalem Querschnitt und bei Anwendung des Verfahrens, in den Rohren vor dem Aufweiten durch die Anbringung von Sicken Materialreserven zu schaffen, ist es vielmehr auch möglich, allein durch den Aufweitschritt eine gute Verbindung zwischen den Rohren und Lamellen zu erhalten. In diesem Fall kann auf die Anwendung von Abstandhaltern u. U. verzichtet werden, da nach der Aufweitung eines mit einer Sicke versehenen Rohrs die Gefahr des nachträglichen Einfallens weit geringer als bei einem Rohr ist, das ohne Vorheriges Anbringen einer Sicke aufgeweitet wird.

**Patentansprüche**

1. Verfahren zur Herstellung von Wärmetauschern, insbesondere für Kraftfahrzeuge, mit einer Mehrzahl von parallel und mit Abstand angeordneten Lamellen, die Öffnungen und an diese angrenzende Kragen mit ovalem oder flachovalem Querschnitt aufweisen, und mit einer Mehrzahl von senkrecht dazu verlaufenden, die Öffnungen und Kragen durchragenden Rohren mit entsprechendem Querschnitt, wobei die Rohre dadurch mit den Lamellen verbunden werden, daß sie zunächst mit einem im Verhältnis zum Querschnitt der Öffnungen und Kragen kleineren Querschnitt hergestellt, dann in die Öffnungen und Kragen eingeführt und dann auf einen im Vergleich zum ursprünglichen Querschnitt der Öffnungen und Kragen größeren Querschnitt erweitert und dadurch gegen die Ränder der Öffnungen und Kragen gepreßt werden, dadurch gekennzeichnet, daß die Rohre (3c) an ihren Breitseiten vor dem Aufweiten mit wenigstens je einer in Längsrichtung verlaufenden, nach innen gerichteten Sicke (14) versehen werden und das Aufweiten der Rohre durch Herausdrücken der in den Sicken gespeicherten Materialreserven erfolgt.

2. Verfahren nach Anspruch 1, dadurch gekennzeichnet, daß ein Einfallen der Rohre nach dem Aufweiten dadurch verhindert wird, daß in die Rohre Abstandhalter eingeführt werden, die die Rohrwandungen zumindest im Bereich ihrer Breitseiten abstützen und eine dem aufgeweiteten Rohrquerschnitt an dieser Stelle entsprechende Breite aufweisen.

3. Verfahren zur Herstellung von Wärmetauschern, insbesondere für Kraftfahrzeuge, mit einer Mehrzahl von parallel und mit Abstand angeordneten Lamellen, die Öffnungen und an diese angrenzende Kragen mit ovalem oder flachovalem Querschnitt aufweisen, und mit einer Mehrzahl von senkrecht dazu verlaufenden, die Öffnungen und Kragen durchragenden Rohren mit entsprechenden Querschnitten, wobei die Rohre dadurch mit den Lamellen verbunden werden, daß sie zunächst mit einem im Verhältnis zum Querschnitt der Öffnungen und Kragen kleineren Querschnitt hergestellt, dann in die Öffnungen und Kragen eingeführt und dann mittels je eines Aufweitwerkzeugs im wesentlichen durch plastische Verformung auf einen im Vergleich zum ursprünglichen Querschnitt der Öffnungen und Kragen größeren Querschnitt erweitert und dadurch gegen die Ränder der Öffnungen und Kragen gepreßt werden, dadurch gekennzeichnet, daß die Rohre (3a) mittels des Aufweitwerkzeugs (17) im wesentlichen auf ihrem ganzen Querschnitt aufgeweitet werden und ein Einfallen der Rohre nach dem Aufweiten dadurch verhindert wird, daß unmittelbar auf die Aufweitwerkzeuge folgend Abstandhalter (12a) in die Rohre eingeführt werden, die die Rohrwandungen zumindest im Bereich ihrer Breitseiten abstützen und eine dem aufgeweiteten Rohrquerschnitt an dieser Stelle entsprechende Breite aufweisen.

4. Verfahren nach Anspruch 1 oder 2, dadurch gekennzeichnet, daß die Rohre aus flachen Bändern hergestellt werden, indem diese schrittweise zu einem Rohr mit ovalem oder flachovalem Querschnitt verformt und dann an ihren sich gegenüberstehenden Längsrändern miteinander verbunden werden, und daß die Sicken (14) vor dem Verbinden der Längsränder angebracht werden.

5. Verfahren nach Anspruch 1 oder 2, dadurch gekennzeichnet, daß die Herstellung der Rohre durch nahtloses Ziehen oder Pressen erfolgt und die Sicken beim Zieh- oder Preßvorgang ausgebildet werden.

6. Verfahren nach Anspruch 1 oder 2, dadurch gekennzeichnet, daß zunächst Rohre mit ovalem oder flachovalem Querschnitt hergestellt und diese dann mit Sicken versehen werden.

7. Verfahren nach einem der Ansprüche 2 bis 6, dadurch gekennzeichnet, daß die Rohre mit in Richtung der Rohrachsen wandernden Aufweitwerkzeugen aufgeweitet und die Abstandhalter dadurch in die Rohre eingeführt werden, daß ihre einen Enden den Aufweitwerkzeugen unmittelbar nachgeschoben oder nachgezogen werden.

8. Wärmetauscher, insbesondere für Kraftfahrzeuge, mit einer Mehrzahl von parallel und mit Abstand angeordneten Lamellen, die Öffnungen und an diese angrenzende Kragen mit ovalem oder flachovalem Querschnitt aufweisen, und mit senkrecht dazu verlaufenden, die Öffnungen und Kragen durchragenden Rohren mit entsprechendem Querschnitt, wobei zur Verbindung der Rohre mit den Lamellen die Rohrwandungen durch Aufweitung der Rohre auf einen im Vergleich zum ursprünglichen Querschnitt der Öffnungen und Kragen größeren Querschnitt gegen die Ränder der Öffnungen und Kragen gepreßt sind, dadurch gekennzeichnet, daß die Rohre (3) durch Ausdrücken wenigstens einer in Längsrichtung verlaufenden Sicke aufgeweitet sind und die Öffnungsränder und Kragen (30) elastisch verformt sind.

9. Wärmetauscher nach Anspruch 8, dadurch gekennzeichnet, daß in die Rohre (3) zumindest im Bereich ihrer Breitseiten (10) Abstandhalter (12) mit einer dem aufgeweiteten Rohrquerschnitt entsprechenden Breite eingesetzt sind.

10. Wärmetauscher, insbesondere für Kraftfahrzeuge, mit einer Mehrzahl von parallel und mit Abstand angeordneten Lamellen, die Öffnungen und an diese angrenzende Kragen mit ovalem oder flachovalem Querschnitt aufweisen, und mit senkrecht dazu verlaufenden, die Öffnungen und Kragen durchragenden Rohren mit entsprechendem Querschnitt, wobei zur Verbindung der Rohre mit den Lamellen die Rohrwandungen durch Aufweitung der Rohre auf einen im Vergleich zum ursprünglichen Querschnitt der Öffnungen und Kragen größeren Querschnitt gegen die Ränder der Öffnungen und Kragen gepreßt sind, dadurch gekennzeichnet, daß die Rohre (3) unter elastischer Verformung der Kragen (30) und auf ihrem ganzen Umfang durch plastische Verformung aufgeweitet und dadurch satt an die Kragen angelegt sind und daß in die Rohre (3) zumindest im Bereich ihrer Breitseiten (10) Abstandhalter (12) mit einer dem aufgeweiteten Rohrquerschnitt entsprechenden Breite eingesetzt sind.

11. Wärmetauscher nach Anspruch 9 oder 10, dadurch gekennzeichnet, daß die Abstandhalter (12) zumindest in einem mittleren Bereich der Breitseiten (10) angeordnet sind.

12. Wärmetauscher nach einem der Ansprüche 9 bis 11, dadurch gekennzeichnet, daß die Abstandhalter sowohl im Bereich der Breitseiten (10) als auch im Bereich der Schmalseiten (11) angeordnet sind.

13. Wärmetauscher nach einem der Ansprüche 9 bis 12, dadurch gekennzeichnet, daß die Abstandhalter (12) über die gesamte Rohrlänge erstreckt sind.

14. Wärmetauscher nach einem der Ansprüche 9 bis 13, dadurch gekennzeichnet, daß die Abstandhalter (12) als Turbulatoren ausgebildet sind.

15. Vorrichtung zum Verbinden der Rohre und Lamellen eines Wärmetauschers nach wenigstens einem der Ansprüche 9 bis 14 und zur Durchführung des Verfahrens nach wenigstens einem der Ansprüche 2 bis 7, mit einer Stapeleinrichtung zum Stapeln der Lamellen (1), mit einer Einrichtung zum Einbringen der Rohre (3) in die Öffnungen (2) und Kragen (30) der Lamellen (1), mit einer Anzahl von zum Aufweiten der Rohre bestimmten Aufweitwerkzeugen (17) und mit einer mit den Aufweitwerkzeugen (17) koppelbaren Einrichtung zum Transport der Aufweitwerkzeuge durch die Rohre auf deren gesamter Länge, dadurch gekennzeichnet, daß die Aufweitwerkzeuge (17) einen Einführungsabschnitt (18) und einen Aufweitabschnitt (19) aufweisen, daß der Außenquerschnitt der Aufweitabschnitte (19) so groß ist, daß die Rohre auf ihrem ganzen Umfang auf einen Außenquerschnitt aufweitbar sind, der größer als der Innenquerschnitt der Kragen (30) ist, und daß das Aufweitwerkzeug (17) mit einer Einrichtung zum Ankoppeln der Abstandhalter (12) derart versehen ist, daß die wirksamen Teile der Abstandhalter (12) unmittelbare Verlängerungen von entsprechenden Teilen der jeweiligen Aufweitabschnitte (19) bilden.

16. Vorrichtung nach Anspruch 15, dadurch gekennzeichnet, daß das Aufweitwerkzeug (17) zwei schwenkbar miteinander verbundene, ein Ende eines Abstandhalters (12) zwischen sich einspannende Teile (20, 21) mit Aufweitabschnitten (23, 24) derart aufweist, daß sich diese mit dem eingespannten Ende zu einem Aufweitabschnitt ergänzen.

17. Vorrichtung nach Anspruch 15, dadurch gekennzeichnet, daß das Aufweitwerkzeug (17) einen Aufweitabschnitt (19) aufweist und ein wirksamer Teil des Abstandhalters (12) im angekoppelten Zustand unmittelbar an den Aufweitabschnitt angrenzt.

**Claims**

1. Method of producing heat exchangers, especially for motor vehicles, with a plurality of lamellae arranged parallel and spaced, which have apertures and adjoining collars of oval or flattened oval cross-section, and with a plurality of tubes with corresponding cross-section running perpendicular thereto, passing through the apertures and collars, wherein the tubes are connected to the lamellae in that they are initially produced with a smaller cross-section relative to the cross-section of the apertures and collars, are then fed into the apertures and collars and then enlarged to a greater cross-section relative to the original cross-section of the tubes and collars and thereby pressed against the edges of the apertures and collars, characterized in that the tubes (3c) are provided on their broad sides prior to the enlargement each with at least one inwardly directed rib (14) running in the longitudinal direction, and the enlargement of the tubes takes place by pressing out the reserve of material stored in the ribs.

2. Method according to claim 1, characterized in that falling in of the tubes after the enlargement is prevented in that spacers are fed into the tubes and abut the tube walls at least in the region of their broad walls and have a breadth at these places corresponding to the enlarged tube cross-section.

3. Method of producing heat exchangers, especially for motor vehicles, with a plurality of lamellae arranged parallel and spaced, which have apertures and adjoining collars of oval or flattened oval cross-section, and with a plurality of tubes with corresponding cross-sections running perpendicular thereto, passing through the apertures and collars, wherein the tubes are connected to the lamellae in that they are initially produced with a smaller cross-section relative to the cross-section of the apertures and collars, are then fed into the apertures and collars and then enlarged, each by means of an expansion tool essentially by plastic deformation, to a greater cross-section relative to the original cross-section of the tubes and collars and thereby pressed against the edges of the apertures and collars, characterized in that the tubes (3a) are enlarged by means of the expansion tool (17) substantially to their full cross-section and falling in of the tubes after the enlargement is prevented in that spacers (12a) following directly on the expansion tools are fed into the tubes and abut the tube walls at least in the region of their broad walls and have a breadth at theses places corresponding to the enlarged tube cross-section.

4. Method according to claim 1 or 2, characterized in that the tubes are produced from flat strips which are deformed stepwise to a tube with oval or flattened oval cross-section and are then joined at their opposed longitudinal edges, and in that the ribs (14) are provided before the joining of the longitudinal edges.

5. Method according to claim 1 or 2, characterized in that the production of the tubes takes place by seamless drawing or extrusion and the ribs are formed in the drawing or extrusion operation.

6. Method according to claim 1 or 2, characterized in that the tubes are initially produced with oval or flattened oval cross-section and are then provided with ribs.

7. Method according to one of claims 2 to 6, characterized in that the tubes are enlarged by expansion tools travelling in the direction of the tube axes and the spacers are fed into the tubes in that their one ends are directly pushed after or pulled after the expansion tools.

8. Heat exchanger, especially for motor vehicles, with a plurality of lamellae arranged parallel and spaced, which have apertures and adjoining collars of oval or flattened oval cross-section, and with tubes with corresponding cross-section running perpendicular thereto, passing through the apertures and collars, wherein the tube walls are pressed against the edges of the apertures and collars for connecting the tubes to the lamellae, by enlargement of the tubes to a greater cross-section relative to the original cross-section of the apertures and collars, characterized in that the tubes (3) are enlarged by pressing out at least one rib running in the longitudinal direction and the apertures and collars (30) are elastically deformed.

9. Heat exchanger according to claim 8, characterized in that spacers (12) are introduced into the tubes (3) at least in the region of their broad sides (10), with a breadth corresponding to the enlarged tube cross-section.

10. Heat exchanger, especially for motor vehicles, with a plurality of lamellae arranged parallel and spaced, which have apertures and adjoining collars of oval or flattened oval cross-section, and with tubes with corresponding cross-section running perpendicular thereto, passing through the apertures and collars, wherein the tube walls are pressed against the edges of the apertures and collars for connecting the tubes to the lamellae, by enlargement of the tubes to a greater cross-section relative to the original cross-section of the apertures and collars, characterized in that the tubes (3) are enlarged by plastic deformation, with elastic deformation of the collars (30) and over their whole periphery, and thereby firmly abut the collars, and in that spacers (12) are fitted in the tubes (3) at least in the region of their broad sides (10), with a breadth corresponding to the enlarged tube cross-section.

11. Heat exchanger according to claim 9 or 10, characterized in that the spacers (12) are arranged at least in a central region of the broad sides (10).

12. Heat exchanger according to one of claims 9 to 11, characterized in that the spacers are arranged both in the region of the broad sides (10) and also in the region of the narrow sides (11).

13. Heat exchanger according to one of claims 9 to 12, characterized in that the spacers (12) extend over the whole tube length.

14. Heat exchanger according to one of claims 9 to 12, characterized in that the spacers (12) are formed as turbulators.

15. Apparatus for connecting the tubes and lamellae of a heat exchanger according to at least one of claims 9 to 14, and for carrying out the method according to at least one of claims 2 to 7, with a stacking device for stacking the lamellae (1), a device for introducing the tubes (3) into the apertures and collars (30) of the lamellae (1), a plurality of expansion tools (17) for the enlargement of the tubes and a device which can be coupled to the expansion tools (17) to transport the expansion tools through the whole length of the tubes, characterized in that expansion tools (17) have a lead-in section (18) and an expanding section (19), in that the outer cross-section of the expanding section (19) is so large that the tubes can be enlarged over their whole periphery to an outer cross-section which is greater than the inner cross-section of the collars (30), and in that the expansion tool (17) is provided with a device for coupling up the spacer, such that the active parts of the spacers (12) form direct continuations of corresponding pars of the respective expanding sections (19).

16. Apparatus according to claim 15, characterized in that the expansion tool (17) comprises two pivotally connected parts (20, 21) gripping the an end of a spacer (12) therebetween, with expanding sections (23, 24) such that these, with the gripped end, amount to an expanding section.

17. Apparatus according to claim 15, characterized in that the expansion tool (17) has an expanding section (19) and an active part of the spacer (12) directly adjoins the expanding section in the coupled state.

## Revendications

1. Procédé pour fabriquer des échangeurs thermiques notamment pour des véhicules à moteur, comportant une pluralité de lamelles disposées écartées l'une de l'autre et parallèles, qui comportent des ouvertures et des collets adjacents à celles-ci et de section transversale ovale ou ovale aplatie, et comportant une pluralité de tubes de section appropriée s'étendant perpendiculairement à ces lamelles et traversant les ouvertures et les collets, les tubes étant reliés aux lamelles par le fait qu'ils sont d'abord fabriqués avec une section plus petite que la section des ouvertures et des collets, puis qu'ils sont ensuite introduits dans les ouvertures et les collets et qu'ils sont ensuite élargis jusqu'à une section transversale plus grande que la section initiale des ouvertures et des collets et ainsi pressés contre les bords des ouvertures et les collets, caractérisé en ce que les tubes (3c) sont munis sur leurs grands côtés, avant l'élargissement, d'au moins une moulure (14) orientée vers l'intérieur et s'étendant dans le sens longitudinal, et en ce que l'élargissement des tubes s'effectue en refoulant vers l'extérieur des réserves de matériau accumulées dans les moulures.

2. Procédé selon la revendication 1, caractérisé en ce qu'on empêche un affaissement des tubes après leur élargissement par le fait qu'on introduit dans les tubes des écarteurs qui soutiennent les parois des tubes au moins dans la zone de leurs grands côtés et ont une largeur correspondant à la section élargie des tubes à cet endroit.

3. Procédé pour fabriquer des échangeurs thermiques, notamment pour véhicules à moteur, comportant une pluralité de lamelles disposées parallèlement et écartées l'une de l'autre, comportant des ouvertures et des collets adjacents à celles-ci et ayant une section transversale ovale ou ovale aplatie, et comportant une pluralité de tubes de section appropriée s'étendant perpendiculairement à ces lamelles et traversant les ouvertures et les collets, les tubes étant reliés aux lamelles par le fait qu'ils sont d'abord fabriqués avec une section transversale plus petite que celle des ouvertures et des collets, puisqu'ils sont introduits dans les ouvertures et les collets et sont ensuite élargis au moyen d'un outil d'élargissement, essentiellement par déformation plastique, jusqu'à la section initiale des ouvertures et des collets et pressés, de ce fait, contre les bords des ouvertures et des collets, caractérisé en ce que les tubes (3a) sont élargis au moyen de l'outil d'élargissement (17) pratiquement jusqu'à leur section transversale complète et qu'on empêche l'affaissement des tubes après l'élargissement par le fait qu'on introduit dans les tubes des écarteurs (12a) suivant immédiatement les outils d'élargissement, lesquels écarteurs soutiennent les parois des tubes au moins dans la zone de leurs grands côtés et ont une largeur correspondant à la section de tube élargie à cet endroit.

4. Procédé selon la revendication 1 ou 2, caractérisé en ce que les tubes sont fabriqués avec des bandes plates qui sont conformées pas à pas pour obtenir un tube de section ovale ou ovale aplatie, et sont ensuite reliées ensemble par leurs bords longitudinaux en vis-à-vis, et en ce que les moulures (14) sont réalisées avant de relier les bords longitudinaux.

5. Procédé selon la revendication 1 ou 2, caractérisé en ce que la fabrication des tubes s'effectue par emboutissage ou matriçage sans soudure, et que les moulures sont réalisées lors de l'opération d'emboutissage ou de matriçage.

6. Procédé selon la revendication 1 ou 2, caractérisé en ce qu'on fabrique d'abord des tubes de section ovale ou ovale aplatie et que ceux-ci sont ensuite munis de moulures.

7. Procédé selon l'une des revendications 2 à 6, caractérisé en ce que les tubes sont élargis avec des outils d'élargissement s'avançant dans le sens des axes des tubes, et que les écarteurs sont introduits dans les tubes pour le fait qu'ils sont poussés ou tirés immédiatement après les outils d'élargissement, par une de leurs extrémités.

8. Echangeur thermique, notamment pour véhicules à moteur, comportant une pluralité de lamelles disposées parallèlement et écartées l'une de l'autre présentant des ouvertures et des collets adjacents à celles-ci, de section transversale ovale ou ovale aplatie, et comportant des tubes de section appropriée s'étendant perpendiculairement aux lamelles et traversant les ouvertures et les collets, dans lequel, pour relier les tubes avec les lamelles, les parois des tubes sont pressées contre les bords des ouvertures et des collets en élargissant les tubes jusqu'à une section transversale plus grande que la section initiale des ouvertures et des collets, caractérisé en ce que les tubes (3) sont élargis en repoussant vers l'extérieur au moins une moulure s'étendant dans le sens longitudinal, et en ce que les bords des ouvertures et les collets (30) sont déformés élastiquement.

9. Echangeur thermique selon la revendication 8, caractérisé en ce qu'on introduit dans les tubes (3), au moins dans la zone de leur grand côté (10), des écarteurs (12) ayant une largeur correspondant à la section de tube élargie.

10. Echangeur thermique, notamment pour des véhicules à moteur, comportant une pluralité de lamelles disposées parallèlement et écartées l'une de l'autre, qui présentent des ouvertures et des collets adjacents à celles-ci, de section transversale ovale et ovale aplatie, et des tubes de section appropriée s'étendant perpendiculairement à ces lamelles et traversant les ouvertures et les collets, échangeur dans lequel, pour relier les tubes avec les lamelles, échangeur dans lequel, pour relier les tubes avec les lamelles, les parois des tubes sont pressées contre les bords des ouvertures et les collets en élargissant les tubes jusqu'à une section transversale plus grande que la section initiale des ouvertures et des collets, caractérisé en ce que les tubes (3) sont élargis par déformation élastique des collets (3) et par déformation plastique sur toute leur périphérie, et sont de ce fait parfaitement appliqués contre les collets, et en ce qu'on introduit dans les tubes (3), au moins dans la zone de leurs grands côtés (10), des écarteurs (12) ayant une largeur correspondant à la section transversale élargie des tubes.

11. Echangeur thermique selon la revendication 9 ou 10, caractérisé en ce que les écarteurs (12) sont disposés au moins dans une zone médiane des grands côtés (10).

12. Echangeur thermique selon l'une des revendications 9 à 11, caractérisé en ce que les écarteurs sont disposés aussi bien dans la zone des grands côtés (10) que dans la zone des petits côtés (11).

13. Echangeur thermique selon l'une des revendications 9 à 12, caractérisé en ce que les écarteurs (12) s'étendent sur toute la longueur des tubes.

14. Echangeur thermique selon l'une des revendications 9 à 13, caractérisé en ce que les écarteurs (12) sont réalisés de façon à créer des turbulences.

15. Dispositif pour relier les tubes et les lamelles d'un échangeur thermique, selon l'une au moins des revendications 9 à 14, et pour mettre en œuvre le procédé selon au moins l'une des revendications 2 à 7, comportant un dispositif d'empilage pour empiler les lamelles (1), un dispositif pour introduire les tubes (3) dans les ouvertures (2) et les collets (30) des lamelles (1), une pluralité d'outils d'élargissement (17) destinés à élargir les tubes, et un dispositif pouvant être couplé aux outils d'élargissement (17) pour transporter les outils d'élargissement dans les tubes sur toute leur longueur, caractérisé en ce que les outils d'élargissement (17) comportent une portion d'introduction (18) et une portion d'élargissement (19), en ce que la section transversale extérieure des portions d'élargissement (19) a une dimension telle que les tubes peuvent être élargis sur toute leur périphérie jusqu'à une section transversale extérieure qui est plus grande que la section transversale intérieure des collets (30), et en ce que l'outil d'élargissement (17) est muni d'un dispositif pour l'accouplement des écarteurs (12) de telle sorte que les parties efficaces des écarteurs (12) constituent des prolongements directs de parties correspondantes des sections d'élargissement respectives (19).

16. Dispositif selon la revendication 15, caractérisé en ce que l'outil d'élargissement (17) comporte deux parties (20, 21) reliées ensemble à pivotement, enserrant entre elles une extrémité d'un écarteur (12), et comportant des portions d'élargissement (23, 24), en sorte que ces dernières se complètent avec l'extrémité enserrée pour former une portion d'élargissement.

17. Dispositif selon la revendication 15, caractérisé en ce que l'outil d'élargissement (17) comporte une portion d'élargissement (19) et en ce qu'une partie efficace de l'écarteur (12) est directement adjacente, à l'état accouplé, à la portion d'élargissement.

Fig.1.

0 176 729

Fig.2.

30

Fig.3.

11
3
b
10
a

Fig.4.

2a  2b  14a  2c  14b  2d

1

12b

3a

12a  3b  3c  3d

Fig.5.

14f  12c  2f  3f

1

14d

2e

3e

14c

14e

2

*Fig.8.*

*Fig.6.*

*Fig.7.*

*Fig.9.*

0 176 729

Fig.10.

Fig.13.

Fig.11.

Fig.12.

4